# EUROPÄISCHE PATENTSCHRIFT

(11) **EP 2 770 169 B1**
(45) Veröffentlichungstag und Bekanntmachung des Hinweises auf die Patenterteilung: **14.08.2019**
(21) Anmeldenummer: 13171953.6
(22) Anmeldetag: 14.06.2013
(51) Int. Cl.: F01D 17/18, F02B 37/02, F02B 37/22, F01D 9/02

(54) **AUFGELADENE BRENNKRAFTMASCHINE MIT ZWEIFLUTIGER TURBINE UND VERFAHREN ZUM BETREIBEN EINER DERARTIGEN BRENNKRAFTMASCHINE**
CHARGED COMBUSTION ENGINE WITH A DOUBLE-FLOW TURBINE AND METHOD FOR OPERATING SUCH A COMBUSTION ENGINE
MOTEUR À COMBUSTION INTERNE CHARGÉ DOTÉ D'UNE TURBINE À DEUX FLUX ET PROCÉDÉ DE FONCTIONNEMENT D'UN TEL MOTEUR À COMBUSTION INTERNE

(30) Priorität: 20.02.2013 DE 102013202744
(43) Veröffentlichungstag der Anmeldung: 27.08.2014
(73) Patentinhaber: Ford Global Technologies, LLC, Dearborn, MI 48126 (US)
(72) Erfinder: Kindl, Helmut, 52066 Aachen (DE); Schorn, Norbert, 52080 Aachen (DE); Smiljanovski, Vanco, 50181 Bedburg (DE); Sommerhoff, Franz Arnd, 52066 Aachen (DE); Stalman, Rob, 52538 Selfkant (DE)
(74) Vertreter: Illing, Rolf

(56) Entgegenhaltungen:
- CN-A- 102 536 433
- DE-A1- 3 302 186
- DE-B- 1 253 510
- US-A- 3 423 926
- US-A- 4 008 572
- US-A- 4 389 845
- US-A1- 2011 041 498
- US-A1- 2011 302 917

## Beschreibung

Die Erfindung betrifft eine aufgeladene Brennkraftmaschine mit mindestens einem Zylinderkopf mit mindestens zwei Zylindern, bei der
- jeder Zylinder mindestens eine Auslassöffnung zum Abführen der Abgase aus dem Zylinder aufweist und sich an jede Auslassöffnung eine Abgasleitung anschließt,
- mindestens zwei Zylinder in der Art konfiguriert sind, dass sie zwei Gruppen mit jeweils mindestens einem Zylinder bilden,
- die Abgasleitungen der Zylinder jeder Zylindergruppe unter Ausbildung eines Abgaskrümmers jeweils zu einer Gesamtabgasleitung zusammenführen, und
- die beiden Gesamtabgasleitungen mit einer zweiflutigen Turbine, die ein in einem Turbinengehäuse auf einer drehbaren Welle gelagertes Laufrad umfasst, in der Art verbunden sind, dass jeweils eine Gesamtabgasleitung mit einer der beiden Eintrittsöffnungen der Turbine verbunden ist, wobei sich an jede Eintrittsöffnung eine Flut der Turbine anschließt und die beiden Fluten bis hin zum Laufrad mittels Gehäusewandung voneinander getrennt sind, so dass die Abgasströme der beiden Fluten getrennt voneinander auf das Laufrad geleitet werden, und
- die beiden Fluten der Turbine innerhalb des Turbinengehäuses durch Freigeben mindestens einer Öffnung in der Gehäusewandung stromaufwärts des Laufrades und stromabwärts der Eintrittsöffnungen miteinander verbindbar sind.

Des Weiteren betrifft die Erfindung ein Verfahren zum Betreiben einer derartigen Brennkraftmaschine. Eine Brennkraftmaschine der eingangs genannten Art wird beispielsweise in der US 3,423,926 A beschrieben.

Im Rahmen der vorliegenden Erfindung umfasst der Begriff Brennkraftmaschine insbesondere Ottomotoren, aber auch Dieselmotoren und Hybrid-Brennkraftmaschinen, d. h. Brennkraftmaschinen, die mit einem Hybrid-Brennverfahren betrieben werden.

Brennkraftmaschinen verfügen über einen Zylinderblock und einen Zylinderkopf, die zur Ausbildung der Zylinder miteinander verbunden werden. Der Zylinderkopf dient üblicherweise zur Aufnahme des Ventiltriebs. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Im Rahmen des Ladungswechsels erfolgt das Ausschieben der Verbrennungsgase über die Auslassöffnungen der mindestens zwei Zylinder und das Füllen der Brennräume, d. h. das Ansaugen des Frischgemisches bzw. der Ladeluft über die Einlassöffnungen.

Die Abgasleitungen, die sich an die Auslassöffnungen anschließen, sind nach dem Stand der Technik zumindest teilweise im Zylinderkopf integriert und werden zu einer gemeinsamen Gesamtabgasleitung oder aber gruppenweise zu zwei oder mehreren Gesamtabgasleitungen zusammengeführt. Das Zusammenführen von Abgasleitungen zu einer Gesamtabgasleitung wird im Allgemeinen und im Rahmen der vorliegenden Erfindung als Abgaskrümmer bezeichnet.

Auf welche Weise die Abgasleitungen der Zylinder im Einzelfall zusammengeführt werden, d. h. die konkrete Auslegung des Abgasabführsystems, hängt im Wesentlichen davon ab, welcher Betriebsbereich der Brennkraftmaschine Priorität genießt, d. h. hinsichtlich welcher Betriebsbereiche das Betriebsverhalten der Brennkraftmaschine optimiert werden soll.

Bei aufgeladenen Brennkraftmaschinen, bei denen im Abgasabführsystem mindestens eine Turbine eines Abgasturboladers vorgesehen ist und die im unteren Drehzahl bzw. Lastbereich, d. h. bei kleineren Abgasmengen ein zufriedenstellendes Betriebsverhalten aufweisen sollen, wird eine sogenannte Stoßaufladung angestrebt, d. h. bevorzugt.

Dabei sollen die - insbesondere während des Ladungswechsels - im Abgasabführsystem ablaufenden dynamischen Wellenvorgänge zum Zwecke der Aufladung und zur Verbesserung des Betriebsverhaltens der Brennkraftmaschine genutzt werden.

Die Evakuierung der Verbrennungsgase aus einem Zylinder der Brennkraftmaschine im Rahmen des Ladungswechsels beruht im Wesentlichen auf zwei unterschiedlichen Mechanismen. Wenn sich zu Beginn des Ladungswechsels das Auslassventil nahe des unteren Totpunktes öffnet, strömen die Verbrennungsgase aufgrund des gegen Ende der Verbrennung im Zylinder vorherrschenden hohen Druckniveaus und der damit verbundenen hohen Druckdifferenz zwischen Brennraum und Abgasleitung mit hoher Geschwindigkeit durch die Auslassöffnung in das Abgasabführsystem. Dieser druckgetriebene Strömungsvorgang wird durch eine hohe Druckspitze begleitet, die auch als Vorauslassstoß bezeichnet wird und sich entlang der Abgasleitung mit Schallgeschwindigkeit fortpflanzt, wobei sich der Druck mit zunehmender Wegstrecke infolge Reibung mehr oder weniger stark abbaut, d. h. verringert.

Im weiteren Verlauf des Ladungswechsels gleichen sich die Drücke im Zylinder und in der Abgasleitung an, so dass die Verbrennungsgase primär nicht mehr druckgetrieben evakuiert, sondern infolge der Hubbewegung des Kolbens ausgeschoben werden.

Bei niedrigen Lasten bzw. Drehzahlen, d. h. geringen Abgasmengen, kann der Vorauslassstoß in vorteilhafter Weise zur Stoßaufladung genutzt werden, womit auch hohe Turbinendruckverhältnisse bei niedrigen Turbinendrehzahlen erzielt werden können. Auf diese Weise können mittels Abgasturboaufladung auch bei nur geringen Abgasmengen, d. h. bei niedrigen Lasten bzw. niedrigen Drehzahlen, hohe Ladedruckverhältnisse, d. h. hohe Ladedrücke auf der Einlassseite generiert werden.

Die Stoßaufladung erweist sich als besonders vorteilhaft bei der Beschleunigung des Turbinenlaufrades, d. h. bei der Erhöhung der Turbinendrehzahl, die im Leerlaufbetrieb der Brennkraftmaschine bzw. bei geringer Last spürbar absinken kann und häufig bei erhöhter Lastanforderung mittels Abgasstrom möglichst verzögerungsfrei wieder angehoben werden soll. Die Trägheit des Laufrades und die Reibung in der Wellenlagerung verzögern in der Regel eine Beschleunigung des Laufrades auf höhere Drehzahlen und damit einen unmittelbaren Anstieg des Ladedrucks.

Um die im Abgasabführsystem ablaufenden dynamischen Wellenvorgänge, insbesondere die Vorauslassstöße, für die Stoßaufladung zur Verbesserung des Betriebsverhaltens der Brennkraftmaschine nutzen zu können, müssen die Druckspitzen bzw. Vorauslassstöße im Abgasabführsystem erhalten werden. Besonders vorteilhaft ist es, wenn sich die Druckschwankungen in den Abgasleitungen verstärken, zumindest aber nicht gegenseitig abschwächen bzw. aufheben.

Zielführend ist es daher, die Zylinder in der Weise zu gruppieren bzw. die Abgasleitungen in der Weise zusammen zu führen, dass die hohen Drücke, insbesondere die Vorauslassstöße der einzelnen Zylinder, im Abgasabführsystem erhalten werden.

Eine Brennkraftmaschine, bei der die Zylinder gruppiert sind, ist auch Gegenstand der vorliegenden Erfindung. Erfindungsgemäß sind mindestens zwei Zylinder in der Art konfiguriert, dass sie zwei Gruppen mit jeweils mindestens einem Zylinder bilden. Die Abgasleitungen der Zylinder jeder Zylindergruppe führen unter Ausbildung eines Abgaskrümmers jeweils zu einer Gesamtabgasleitung zusammen. Die Zylinder sind dabei in der Art konfiguriert, dass sich die dynamischen Wellenvorgänge in den Abgasleitungen der Zylinder einer Gruppe möglichst wenig nachteilig beeinflussen.

Bei einem Zylinderkopf mit vier in Reihe angeordneten Zylindern ist es diesbezüglich vorteilhaft, zwei Zylinder, die einen Zündabstand von 360°KW aufweisen, jeweils zu einer Zylindergruppe zusammen zu fassen. Wird beispielweise die Zündung in den Zylindern gemäß der Zündfolge 1 - 2 - 4 - 3 bzw. gemäß der Zündfolge 1 - 3 - 4 - 2 initiiert, ist es vorteilhaft, die außenliegenden Zylinder zu einer ersten Gruppe und die innenliegenden Zylinder zu einer zweiten Gruppe zusammen zu fassen.

Die Stoßaufladung hat aber auch Nachteile. So verschlechtert sich in der Regel der Ladungswechsel infolge der Druckschwankungen im Abgasabführsystem. Die Zylinder einer Gruppe können sich beim Ladungswechsel gegenseitig behindern, d. h. beeinträchtigen. Die Druckwellen, die von einem Zylinder ausgehen, laufen nicht nur durch die mindestens eine Abgasleitung dieses Zylinders, sondern vielmehr auch entlang der Abgasleitungen der anderen Zylinder dieser Gruppe und zwar gegebenenfalls bis zu der am Ende der jeweiligen Leitung vorgesehenen Auslassöffnung. Während des Ladungswechsels bereits in eine Abgasleitung ausgeschobenes bzw. abgeführtes Abgas kann somit erneut in den Zylinder gelangen und zwar infolge der Druckwelle, die von einem anderen Zylinder ausgeht. Als nachteilig erweist es sich insbesondere, wenn gegen Ende des Ladungswechsels an der Auslassöffnung eines Zylinders Überdruck herrscht bzw. sich die Druckwelle eines anderen Zylinders die Abgasleitung entlang in Richtung Auslassöffnung ausbreitet, was der Evakuierung der Verbrennungsgase aus diesem Zylinder entgegenwirkt. Die Verbrennungsgase werden in dieser Phase des Ladungswechsels maßgeblich infolge der Hubbewegung des Kolbens ausgeschoben. Im Einzelfall kann sogar Abgas, das aus einem Zylinder stammt, in einen anderen Zylinder gelangen, bevor dessen Auslass schließt. Der verschlechterte Ladungswechsel führt insbesondere bei steigender Last und zunehmender Drehzahl zu Nachteilen. Das im Zylinder befindliche Abgas, d. h. der im Zylinder verbleibende Restgasanteil, hat maßgeblich Einfluss auf das Klopfverhalten der Brennkraftmaschine, wobei die Gefahr einer klopfenden Verbrennung mit zunehmendem Abgasanteil steigt.

Des Weiteren ist zu berücksichtigen, dass eine Turbine am effektivsten unter stationären Motorbetriebsbedingungen betrieben wird. Um eine stromabwärts der Zylinder im Abgasabführsystem vorgesehene Turbine bei hohen Lasten bzw. hohen Drehzahlen, d. h. bei großen Abgasmengen, optimal betreiben zu können, sollte die Turbine mit einem möglichst konstanten Abgasstrom beaufschlagt werden, weshalb unter diesen Betriebsbedingungen ein sich wenig verändernder Druck stromaufwärts der Turbine bevorzugt wird, um eine sogenannte Stauaufladung zu realisieren.

Durch ein entsprechend großes Abgasvolumen stromaufwärts der Turbine können die Druckpulsationen in den Abgasleitungen geglättet werden. Insofern erweist sich die Gruppierung der Zylinder, bei der die Abgasleitungen gruppenweise zusammengeführt werden, wodurch das Volumen des Abgasabführsystems stromaufwärts der Turbine in mehrere Teilvolumina aufgeteilt wird, als kontraproduktiv.

Vielmehr wäre es hinsichtlich einer Stauaufladung vorteilhaft, die Abgasleitungen sämtlicher Zylinder zu einer einzigen Gesamtabgasleitung zusammen zu führen, um das Abgasvolumen des Abgasabführsystems stromaufwärts einer in dieser Gesamtabgasleitung angeordneten Turbine weitestgehend zu vergrößern, d. h. zu maximieren und die Druckschwankungen zu minimieren.

Bei der Optimierung des Abgasabführsystems sowohl hinsichtlich geringer Abgasmengen als auch hinsichtlich größerer Abgasmengen ergibt sich somit bei der Gestaltung des Abgasabführsystems ein Zielkonflikt. Eine Gruppierung der Zylinder zur Realisierung einer Stoßaufladung führt zu einem günstigen Betriebsverhalten bei kleinen Abgasmengen, wohingegen bei größeren Abgasmengen Nachteile inkaufzunehmen sind. Wird hingegen stromaufwärts der Turbine ein möglichst großes Abgasvolumen realisiert, um bei größeren Abgasmengen die Vorteile einer Stauaufladung nutzen zu können, verschlechtert sich das Betriebsverhalten bei kleineren Abgasmengen.

Aus dem Stand der Technik sind Konzepte bekannt, bei denen sich die beiden Abgaskrümmer der zwei Zylindergruppen miteinander verbinden bzw. voneinander trennen lassen. Das Abgasabführsystem wird dann in Abhängigkeit der Größe des Abgasstroms konfiguriert, d. h. bei kleinen Abgasmengen durch Trennen der Krümmer entsprechend einer Stoßaufladung und bei größeren Abgasmengen durch Verbinden der Krümmer entsprechend einer Stauaufladung.

Nachteilig an dem vorstehend beschriebenen Konzept ist, dass durch die Verbindung der Krümmer eine Verbindung nahe der Auslassöffnungen der Zylinder realisiert wird, wodurch die oben beschriebene Restgasproblematik bzw. die damit zusammenhängende Klopfproblematik Vorschub erhält, d. h. verschärft wird.

Vor dem Hintergrund des Gesagten ist es eine Aufgabe der vorliegenden Erfindung, eine aufgeladene Brennkraftmaschine gemäß dem Oberbegriff des Anspruchs 1 bereitzustellen, die einen optimierten Betrieb sowohl bei geringen Abgasmengen als auch bei größeren Abgasmengen ermöglicht.

Eine weitere Teilaufgabe der vorliegenden Erfindung ist es, ein Verfahren zum Betreiben einer derartigen Brennkraftmaschine aufzuzeigen.

Gelöst wird die erste Teilaufgabe durch eine aufgeladene Brennkraftmaschine mit mindestens einem Zylinderkopf mit mindestens zwei Zylindern, bei der
- jeder Zylinder mindestens eine Auslassöffnung zum Abführen der Abgase aus dem Zylinder aufweist und sich an jede Auslassöffnung eine Abgasleitung anschließt,
- mindestens zwei Zylinder in der Art konfiguriert sind, dass sie zwei Gruppen mit jeweils mindestens einem Zylinder bilden,
- die Abgasleitungen der Zylinder jeder Zylindergruppe unter Ausbildung eines Abgaskrümmers jeweils zu einer Gesamtabgasleitung zusammenführen, und
- die beiden Gesamtabgasleitungen mit einer zweiflutigen Turbine, die ein in einem Turbinengehäuse auf einer drehbaren Welle gelagertes Laufrad umfasst, in der Art verbunden sind, dass jeweils eine Gesamtabgasleitung mit einer der beiden Eintrittsöffnungen der Turbine verbunden ist, wobei sich an jede Eintrittsöffnung eine Flut der Turbine anschließt und die beiden Fluten bis hin zum Laufrad mittels Gehäusewandung voneinander getrennt sind, so dass die Abgasströme der beiden Fluten getrennt voneinander auf das Laufrad geleitet werden,
- die beiden Fluten der Turbine innerhalb des Turbinengehäuses durch Freigeben mindestens einer Öffnung in der Gehäusewandung stromaufwärts des Laufrades und stromabwärts der Eintrittsöffnungen miteinander verbindbar sind,
und die dadurch gekennzeichnet ist, dass
- mindestens ein verschiebbares Wandstück vorgesehen ist, das dem Freigeben der mindestens einen Öffnung in der Gehäusewandung dient, wobei das mindestens eine verschiebbare Wandstück entlang der Strömungsrichtung des Abgases verschiebbar ist.

Bei der erfindungsgemäßen Brennkraftmaschine kann das Volumen des mit einer einzelnen Flut der Turbine kommunizierenden Abgassystems variiert werden und zwar durch ein Verbinden bzw. Trennen der beiden Fluten der Turbine.

Folglich kann auch das Abgasvolumen bzw. das Abgasabführsystem stromaufwärts des Laufrades der zweiflutigen Turbine an unterschiedliche Betriebsbedingungen der Brennkraftmaschine, insbesondere an unterschiedlich großen Abgasmengen, angepasst und diesbezüglich optimiert werden.

Gegenüber dem Verbinden der beiden Abgaskrümmer hat das erfindungsgemäße Verbinden der beiden Fluten der Turbine den Vorteil, dass die verbindende Öffnung der Abgassysteme der beiden Zylindergruppen weiter entfernt von den Auslassöffnungen der Zylinder angeordnet ist, wodurch die abgasleitungsmäßige Wegstrecke zwischen einem Zylinder der einen Gruppe und einem Zylinder der anderen Gruppe vergrößert wird. Der Gefahr einer gegenseitigen, insbesondere nachteiligen Einflussnahme beim Ladungswechsel wird dadurch entgegengewirkt. Die oben beschriebene Restgasproblematik bzw. Klopfproblematik entschärft sich bzw. entfällt.

Die vorstehend beschriebenen Zusammenhänge und Effekte sind insbesondere bei aufgeladenen Brennkraftmaschinen, bei denen die Abgasleitungen der Zylinder jeder Zylindergruppe jeweils innerhalb des Zylinderkopfes unter Ausbildung eines Abgaskrümmers zu einer Gesamtabgasleitung zusammenführen, von hoher Relevanz, da durch ein Verbinden der Krümmer eine Verbindung realisiert werden würde, die außergewöhnlich nahe an den Auslassöffnungen der Zylinder platziert wäre.

Erfindungsgemäß ist mindestens ein verschiebbares Wandstück vorgesehen, das dem Freigeben der mindestens einen Öffnung in der Gehäusewandung dient. Die Verwendung eines Wandstücks eröffnet die Möglichkeit, eine vergleichsweise große Öffnung in einfacher Weise eben durch Verschieben dieses Wandstücks freizugeben.

Das mindestens eine verschiebbare Wandstück ist dabei erfindungsgemäß entlang der Strömungsrichtung des Abgases verschiebbar.

Damit wird die erste der Erfindung zugrunde liegende Aufgabe gelöst, nämlich eine aufgeladene Brennkraftmaschine gemäß dem Oberbegriff des Anspruchs 1 bereitgestellt, die einen optimierten Betrieb sowohl bei geringen Abgasmengen als auch bei größeren Abgasmengen ermöglicht.

Der aus dem Stand der Technik bekannte Zielkonflikt, der aus den unterschiedlichen Anforderungen der Stauaufladung bzw. Stoßaufladung an das stromaufwärts des Laufrades befindliche Abgasvolumen resultiert, nämlich einerseits zur Realisierung einer Stoßaufladung bei geringeren Abgasmengen ein kleines Volumen bereitzustellen und andererseits zum Zwecke einer Stauaufladung bei größeren Abgasmengen ein möglichst großes Volumen zum Abbau der Druckspitzen und zur Glättung des Abgasdrucks zur Verfügung zu stellen, wird aufgelöst.

Bei kleineren Abgasmengen bleiben die beiden Fluten der Turbine und damit die Abgassysteme der Zylindergruppen voneinander getrennt, so dass jede Flut nur mit den Abgasleitungen der Zylindergruppe kommuniziert, aus denen sie originär gespeist wird. Das Abgasvolumen stromaufwärts einer Flut ergibt sich aus dem Volumen der Abgasleitungen des dazugehörigen Krümmers und dem Volumen der Gesamtabgasleitung, die den Krümmer mit der Eintrittsöffnung der entsprechenden Turbinenflut verbindet.

Die vergleichsweise kleinen Volumina stromaufwärts des Laufrades gestatten eine Stoßaufladung. Unter Ausnutzung der sich in den Abgaskrümmern ausbreitenden Druckspitzen können dann bei nur geringen Abgasmengen hohe Turbinendruckverhältnisse erzielt werden. Bei Verwendung der Turbine im Rahmen einer Abgasturboaufladung können auf diese Weise hohe Ladedruckverhältnisse, d. h. hohe Ladedrücke, bei nur geringen Abgasmengen generiert werden.

Die im Rahmen einer Stauaufladung bei größeren Abgasmengen als nachteilig anzusehenden Druckschwankungen im Abgasabführsystem können durch Verbinden der beiden Fluten der Turbine geglättet, günstigstenfalls sogar eliminiert werden. Dabei werden die Volumina des Abgasabführsystems stromaufwärts des Laufrades zusammengelegt. Jede einzelne Flut kommuniziert dann nicht mehr nur mit dem Abgasvolumen der ihr zugeordneten Zylindergruppe, sondern ebenfalls mit dem Abgasvolumen der anderen Zylindergruppe. Es wird damit jeder Flut ein zusätzliches Volumen zur Verfügung gestellt, wodurch sich das Abgasvolumen stromaufwärts jeder Flut vergrößert bzw. stromaufwärts des Laufrades anstatt zwei kleinen Volumina ein großes Volumen bereitsteht. Diese Volumenvergrößerung gewährleistet einen sich wenig verändernden, im Wesentlichen konstanten Abgasdruck stromaufwärts des Laufrades und damit günstige Bedingungen für eine Stauaufladung bei größeren Abgasmengen.

Der Eintrittsbereich einer zweiflutigen Turbine weist zwei Eintrittskanäle auf. Mehrflutige Turbinen eignen sich daher insbesondere für aufgeladene Brennkraftmaschinen, bei denen die Abgasleitungen der Zylinder gruppenweise zusammengeführt werden, um eine Stoßaufladung zu realisieren. Durch die beiden erfindungsgemäß miteinander verbindbaren Fluten der zweiflutigen Turbine ist ein Wechsel zwischen Stoßaufladung und Stauaufladung möglich. Die Turbine kann grundsätzlich mit einer variablen Turbinengeometrie ausgestattet werden, die durch Verstellen an den jeweiligen Betriebspunkt der Brennkraftmaschine angepasst werden kann.

Bei der erfindungsgemäßen Brennkraftmaschine werden die Abgasleitungen von mindestens zwei Zylindern unter Ausbildung von zwei Abgaskrümmern zu zwei Gesamtabgasleitungen zusammengeführt. Insofern sind Ausführungsformen mit drei, vier, fünf oder mehr Zylindern, bei denen die Abgasleitungen von mehr als zwei Zylindern zu zwei Gesamtabgasleitungen zusammengeführt werden, ebenfalls erfindungsgemäße Brennkraftmaschinen.

Weitere vorteilhafte Ausführungsformen der erfindungsgemäßen Brennkraftmaschine werden im Zusammenhang mit den Unteransprüchen erörtert.

Vorteilhaft sind Ausführungsformen der aufgeladenen Brennkraftmaschine, bei denen die zweiflutige Turbine eine Doppelstromturbine ist, bei der die beiden Fluten übereinander angeordnet sind und das Laufrad zumindest entlang eines bogenförmigen Abschnitts spiralförmig auf unterschiedlich großen Radien umschließen.

Vorteilhaft sind dabei Ausführungsformen der aufgeladenen Brennkraftmaschine, bei denen die beiden Eintrittsöffnungen der Doppelstromturbine radial unterschiedlich weit beabstandet zur Welle der Turbine im Gehäuse angeordnet sind.

Eine Doppelstromturbine hat einen im Vergleich zur Zwillingsstromturbine höheren Wirkungsgrad und ein verbessertes Anströmverhalten des Laufrades. Zudem ist die Doppelstromturbine thermisch höher belastbar. Der letztgenannte Vorteil ergibt sich aus der Anordnung der Fluten übereinander und wird im Rahmen der Figurenbeschreibung näher erläutert.

Vorteilhaft können aber auch Ausführungsformen der aufgeladenen Brennkraftmaschine sein, bei denen die zweiflutige Turbine eine Zwillingsstromturbine ist, bei der die beiden Fluten nebeneinander angeordnet sind und das Laufrad zumindest entlang eines bogenförmigen Abschnitts spiralförmig auf gleichgroßen Radien umschließen.

Bei aufgeladenen Brennkraftmaschinen, bei denen die zweiflutige Turbine eine Zwillingsstromturbine ist, sind Ausführungsformen vorteilhaft, die dadurch gekennzeichnet sind, dass die beiden Eintrittsöffnungen der Zwillingsstromturbine radial gleichweit beabstandet zur Welle der Turbine im Gehäuse angeordnet sind.

Vorteilhaft sind Ausführungsformen der aufgeladenen Brennkraftmaschine, bei denen die Gehäusewandung eine unbewegliche, fest mit dem Gehäuse verbundene Wand ist. Diese Ausführung der Gehäusewandung gewährleistet, dass die vom heißen Abgas in die Gehäusewandung eingebrachte Wärme in vorteilhafter Weise und ausreichendem Maße in das und via Gehäuse abgeführt wird.

Bei aufgeladenen Brennkraftmaschinen, bei denen mindestens ein verschiebbares Wandstück zum Freigeben der mindestens einen Öffnung vorgesehen ist, sind Ausführungsformen vorteilhaft, die dadurch gekennzeichnet sind, dass die mindestens eine Öffnung eine kammförmige Gestalt aufweist und das mindestens eine verschiebbare Wandstück eine dazu korrespondierende Gestalt hat.

Das Zusammenwirken der kammförmigen Öffnung mit dem dazu korrespondierenden kammförmigen Wandstück sorgt für eine stabile Gehäusewandung sowohl bei geschlossener als auch bei freigegebener Öffnung.

Vorteilhaft sind Ausführungsformen der aufgeladenen Brennkraftmaschine, bei denen die Abgasleitungen der Zylinder jeder Zylindergruppe innerhalb des Zylinderkopfes unter Ausbildung von zwei Abgaskrümmern jeweils zu einer Gesamtabgasleitung zusammenführen.

Die im Abgasabführsystem vorgesehene zweiflutige Turbine kann dann sehr nah am Auslass der Brennkraftmaschine, d. h. nahe an den Auslassöffnungen der Zylinder, angeordnet werden. Dies hat gleich mehrere Vorteile, insbesondere weil sich die Abgasleitungen zwischen den Zylindern und der Turbine verkürzen.

Da sich der Weg zur Turbine für die heißen Abgase verkürzt, nimmt auch das Volumen der Abgaskrümmer bzw. des Abgasabführsystems stromaufwärts der Turbine ab. Die thermische Trägheit des Abgasabführsystems nimmt durch Reduzierung der Masse und der Länge der beteiligten Abgasleitungen ebenfalls ab.

Auf diese Weise kann die Abgasenthalpie der heißen Abgase, die maßgeblich vom Abgasdruck und der Abgastemperatur bestimmt wird, optimal genutzt und ein schnelles Ansprechverhalten der Turbine gewährleistet werden.

Die vorgeschlagene Maßnahme führt des Weiteren zu einer kompakten Bauweise des Zylinderkopfes und damit der erfindungsgemäßen Brennkraftmaschine und gestattet ein dichtes Packaging der gesamten Antriebseinheit.

Die Verkürzung der Leitungslängen und die damit einhergehende Verkleinerung des Abgasvolumens stromaufwärts der Turbine unterstützt die Stoßaufladung im unteren Last- bzw. Drehzahlbereich.

Die zweite der Erfindung zugrunde liegende Teilaufgabe, nämlich ein Verfahren zum Betreiben einer aufgeladenen Brennkraftmaschine einer zuvor beschriebenen Art aufzuzeigen, wird gelöst durch ein Verfahren, bei dem die beiden Fluten der Turbine miteinander verbunden werden, wenn die Abgasmenge der beiden Zylindergruppen eine erste vorgebbare Abgasmenge übersteigt, wobei die beiden Fluten der Turbine durch Verschieben des mindestens einen Wandstücks miteinander verbunden werden.

Das im Zusammenhang mit der erfindungsgemäßen Brennkraftmaschine Gesagte gilt ebenfalls für das erfindungsgemäße Verfahren.

Bei einer nicht aufgeladenen Brennkraftmaschine korrespondiert die Abgasmenge näherungsweise mit der Drehzahl und/oder Last der Brennkraftmaschine und zwar abhängig von der im Einzelfall verwendeten Laststeuerung. Bei einem traditionellen Ottomotor mit Quantitätsregelung steigt die Abgasmenge auch bei konstanter Drehzahl mit zunehmender Last an, wohingegen die Abgasmenge bei traditionellen Dieselmotoren mit Qualitätsregelung lediglich drehzahlabhängig ist, weil bei Laständerung und konstanter Drehzahl die Gemischzusammensetzung, nicht jedoch die Gemischmenge variiert.

Wird eine Brennkraftmaschine mit Quantitätsregelung eingesetzt, bei der die Last über die Menge an Frischgemisch gesteuert wird, bedeutet die erfindungsgemäße Vorgehensweise beim Betreiben dieser Brennkraftmaschine, dass die Fluten der Turbine miteinander verbunden werden, wenn - eine konkrete Drehzahl vorausgesetzt - die Last der Brennkraftmaschine eine erste vorgebbare Last übersteigt, da die Abgasmenge bei einer derartigen Brennkraftmaschine mit der Last korrespondiert und die Abgasmenge mit zunehmender Last steigt und mit abnehmender Last sinkt. Zudem werden die beiden Fluten der Turbine miteinander verbunden, wenn die Drehzahl des Ottomotors eine vorgebbare Drehzahl übersteigt, da die Abgasmenge unabhängig von der im Einzelfall verwendeten Laststeuerung mit zunehmender Drehzahl steigt und mit abnehmender Drehzahl sinkt.

Liegt der Brennkraftmaschine hingegen eine Qualitätsregelung zugrunde, bei der die Last über die Zusammensetzung des Frischgemischs gesteuert wird und sich die Abgasmenge nahezu ausschließlich mit der Drehzahl ändert, d. h. proportional zur Drehzahl ist, werden gemäß dem erfindungsgemäßen Verfahren zum Betreiben dieser Brennkraftmaschine die beiden Fluten der Turbine lastunabhängig miteinander verbunden, wenn die Drehzahl der Brennkraftmaschine eine erste vorgebbare Drehzahl übersteigt, da die Abgasmenge vorliegend mit zunehmender Drehzahl steigt und mit abnehmender Drehzahl sinkt.

Handelt es sich um eine - insbesondere mittels Abgasturboaufladung - aufgeladene Brennkraftmaschine, muss zusätzlich berücksichtigt werden, dass sich der Ladedruck auf der Einlassseite mit der Last und/oder der Drehzahl ändern kann und Einfluss auf die Abgasmenge hat. Die vorstehenden und vereinfacht dargestellten Zusammenhänge zwischen der Abgasmenge und der Last bzw. Drehzahl gelten dann folglich nicht in dieser allgemeinen Form. Daher stellt das erfindungsgemäße Verfahren ganz allgemein auf die Abgasmenge ab und nicht auf die Last bzw. Drehzahl. Die beiden Fluten der Turbine werden daher miteinander verbunden, wenn die Abgasmenge der beiden Zylindergruppen eine erste vorgebbare Abgasmenge übersteigt.

Vorteilhaft sind Verfahrensvarianten, bei denen die beiden Fluten der Turbine miteinander verbunden werden, wenn die Abgasmenge der beiden Zylindergruppen die erste vorgebbare Abgasmenge übersteigt und für eine vorgebbare Zeitspanne *Δt₁* größer ist als diese erste vorgebbare Abgasmenge.

Die Einführung einer zusätzlichen Bedingung für das Verbinden der beiden Fluten soll einen zu häufigen Moduswechsel zwischen Stoßaufladung und Stauaufladung verhindern, insbesondere einen Übergang zur Stauaufladung, wenn die Abgasmenge nur kurzzeitig die erste vorgebbare Abgasmenge überschreitet und dann wieder fällt bzw. um den ersten vorgegebenen Wert für die Abgasmenge schwankt, ohne dass das Überschreiten einen Übergang zu Stauaufladung rechtfertigen würde.

Vorteilhaft sind Verfahrensvarianten, bei denen ausgehend von miteinander verbundenen Fluten die beiden Fluten der Turbine voneinander getrennt werden, wenn die Abgasmenge der beiden Zylindergruppen eine zweite vorgebbare Abgasmenge unterschreitet.

Aus bereits zuvor genannten Gründen sind Verfahrensvarianten vorteilhaft, bei denen die beiden Fluten der Turbine voneinander getrennt werden, wenn die Abgasmenge der beiden Zylindergruppen die zweite vorgebbare Abgasmenge unterschreitet und für eine vorgebbare Zeitspanne *Δt₂* kleiner ist als diese zweite vorgebbare Abgasmenge.

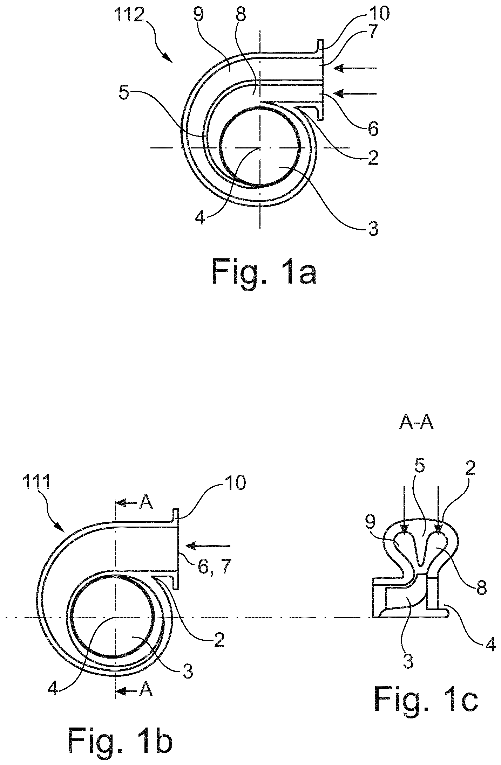

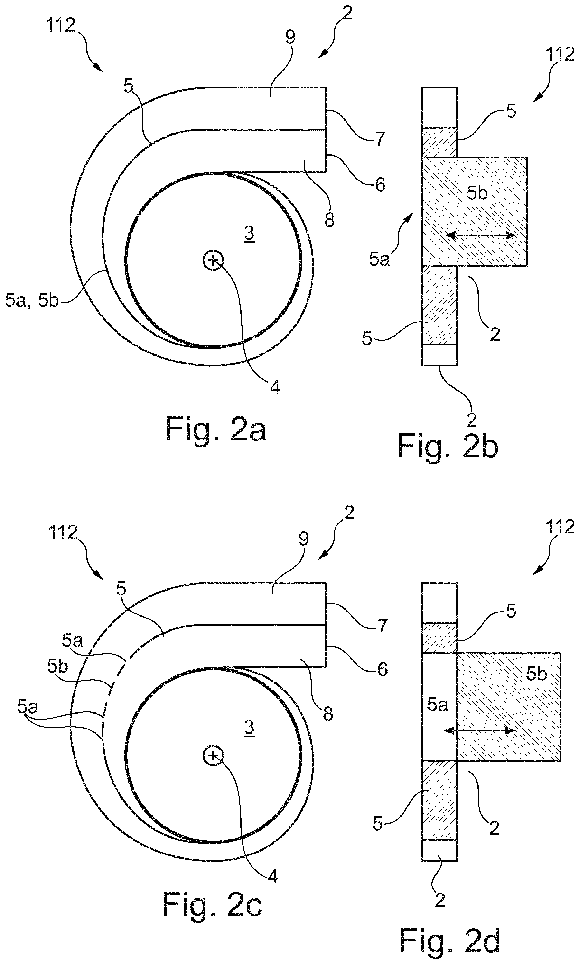

Im Folgenden wird die Erfindung anhand eines Ausführungsbeispiels und der Figuren 1a, 1b, 1c, 2a, 2b, 2c und 2d näher beschrieben. Hierbei zeigt:
- Fig. 1a: schematisch den prinzipiellen Aufbau einer Doppelstromturbine geschnitten senkrecht zur Drehachse des Laufrades,
- Fig. 1b: schematisch den prinzipiellen Aufbau einer Zwillingsstromturbine geschnitten senkrecht zur Drehachse des Laufrades,
- Fig. 1c: schematisch die in Figur 1b dargestellte Zwillingsstromturbine entlang des in Figur 1b kenntlich gemachten Schnitts A - A,
- Fig. 2a: schematisch die zweiflutige Turbine einer herkömmlichen aufgeladenen Brennkraftmaschine geschnitten senkrecht zur Drehachse des Laufrades und mit getrennten Fluten,
- Fig. 2b: schematisch die in Figur 2a dargestellte Turbine in einem gegenüber Figur 2a um 90° gedrehten Schnitt,
- Fig. 2c: schematisch die in Figur 2a dargestellte Turbine geschnitten senkrecht zur Drehachse des Laufrades und mit verbundenen Fluten, und
- Fig. 2d: schematisch die in Figur 2c dargestellte Turbine in einem gegenüber Figur 2c um 90° gedrehten Schnitt.

Figur 1a zeigt schematisch den prinzipiellen Aufbau einer Doppelstromturbine 12 geschnitten senkrecht zur Drehachse 4 des Laufrades 3.

Die dargestellte Doppelstromturbine 12 ist ein Beispiel für eine zweiflutige Turbine 1, d. h. für eine Turbine 1 mit zwei Fluten 8, 9. Die Turbine 1 verfügt über ein Turbinengehäuse 2, in dem ein Laufrad 3 auf einer drehbaren Welle 4 gelagert ist.

Die Doppelstromturbine 12 ist dadurch gekennzeichnet, dass die beiden Fluten 8, 9 übereinander angeordnet sind und das Laufrad 3 zumindest entlang eines bogenförmigen Abschnitts spiralförmig auf unterschiedlich großen Radien umschließen. Die beiden Eintrittsöffnungen 6, 7 der Doppelstromturbine 12 sind in einem Flansch 10 des Gehäuses 5 radial unterschiedlich weit beabstandet zur Welle 4 der Turbine 1 angeordnet, wobei sich an jede Eintrittsöffnung 6, 7 eine Flut 8, 9 der Turbine 1 anschließt und die beiden Fluten 8, 9 bis hin zum Laufrad 3 mittels Gehäusewandung 5 voneinander getrennt sind. Auf diese Weise werden die Abgasströme der beiden Fluten 8, 9 getrennt voneinander auf das Laufrad 3 geleitet.

Die Figuren 1b und 1c zeigen schematisch den prinzipiellen Aufbau einer Zwillingsstromturbine 11, wobei es sich bei Figur 1b um einen Schnitt senkrecht zur Drehachse 4 des Laufrades 3 handelt und Figur 1c die Zwillingsstromturbine 11 entlang des in Figur 1b kenntlich gemachten Schnitts A - A zeigt.

Es sollen nur die Unterschiede zu der in Figur 1a dargestellten Doppelstromturbine erörtert werden, weshalb im Übrigen Bezug genommen wird auf Figur 1a und die dazugehörige Beschreibung. Für dieselben Bauteile wurden dieselben Bezugszeichen verwendet.

Die Zwillingsstromturbine 11 ist dadurch gekennzeichnet, dass die beiden Fluten 8, 9 nebeneinander angeordnet sind und das Laufrad 3 zumindest entlang eines bogenförmigen Abschnitts spiralförmig auf gleichgroßen Radien umschließen. Die beiden Eintrittsöffnungen 6, 7 der Zwillingsstromturbine 11 sind radial gleichweit beabstandet zur Welle 4 der Turbine 1 im Gehäuse 5 angeordnet.

Die Gehäusewandung 5 der Zwillingsstromturbine 11 ist an ihrem freien Ende thermisch wesentlich höher belastet als die der Doppelstromturbine 12, insbesondere im Übergangsbereich zum Laufrad 3, wie aus Figur 1c ersichtlich ist.

Die Figuren 2a, 2b, 2c und 2d zeigen schematisch die zweiflutige Turbine 1 einer aufgeladenen Brennkraftmaschine. Es soll nur ergänzend zu Figur 1a ausgeführt werden, weshalb im Übrigen Bezug genommen wird auf Figur 1a und die dazugehörige Figurenbeschreibung. Für dieselben Bauteile wurden dieselben Bezugszeichen verwendet.

Die gezeigte Doppelstromturbine 12 ist dadurch gekennzeichnet, dass die beiden Fluten 8,9 innerhalb des Turbinengehäuses 2 durch Freigeben mehrerer Öffnungen 5a in der Gehäusewandung 5 miteinander verbindbar sind. Die Öffnungen 5a sind stromaufwärts des Laufrades 3 und stromabwärts der Eintrittsöffnungen 6, 7 in der Gehäusewandung 5 angeordnet.

Zum Freigeben und Verschließen der Öffnungen 5a dient ein verschiebbares Wandstück 5b, das entlang der Drehachse 4 des Laufrades 3, d. h. entlang einer Parallelen zur Drehachse 4 des Laufrades 3, verschiebbar ist.

Die Figuren 2a und 2b zeigen die Doppelstromturbine 12 mit getrennten Fluten 8,9, d. h. mit verschlossenen Öffnungen 5a, wohingegen die Figuren 2c und 2d die Doppelstromturbine 12 die Turbine 1 mit verbundenen Fluten, d. h. mit freigegebenen Öffnungen 5a zeigt.

Zum Freigeben und Verschließen der Öffnungen 5a dient ein verschiebbares Wandstück 5b, das entlang der Drehachse 4 des Laufrades 3, d. h. entlang einer Parallelen zur Drehachse 4 des Laufrades 3, verschiebbar ist.

Die Figuren 2a und 2b zeigen die Doppelstromturbine 12 mit getrennten Fluten 8,9, d. h. mit verschlossenen Öffnungen 5a, wohingegen die Figuren 2c und 2d die Doppelstromturbine 12 die Turbine 1 mit verbundenen Fluten, d. h. mit freigegebenen Öffnungen 5a zeigt.

### Bezugszeichen

- 1: zweiflutige Turbine
- 2: Turbinengehäuse
- 3: Laufrad
- 4: Drehachse, Welle
- 5: Gehäusewandung
- 5a: Öffnung in der Gehäusewandung
- 5b: verschiebbares Wandstück
- 6: erste Eintrittsöffnung
- 7: zweite Eintrittsöffnung
- 8: erste Flut
- 9: zweite Flut
- 10: Flansch
- 11: Zwillingsturbine
- 12: Doppelstromturbine

## Patentansprüche

1. Aufgeladene Brennkraftmaschine mit mindestens einem Zylinderkopf mit mindestens zwei Zylindern, bei der
- jeder Zylinder mindestens eine Auslassöffnung zum Abführen der Abgase aus dem Zylinder aufweist und sich an jede Auslassöffnung eine Abgasleitung anschließt,
- mindestens zwei Zylinder in der Art konfiguriert sind, dass sie zwei Gruppen mit jeweils mindestens einem Zylinder bilden,
- die Abgasleitungen der Zylinder jeder Zylindergruppe unter Ausbildung eines Abgaskrümmers jeweils zu einer Gesamtabgasleitung zusammenführen,
- die beiden Gesamtabgasleitungen mit einer zweiflutigen Turbine (1), die ein in einem Turbinengehäuse (2) auf einer drehbaren Welle (4) gelagertes Laufrad (3) umfasst, in der Art verbunden sind, dass jeweils eine Gesamtabgasleitung mit einer der beiden Eintrittsöffnungen (6, 7) der Turbine (1) verbunden ist, wobei sich an jede Eintrittsöffnung (6, 7) eine Flut (8, 9) der Turbine (1) anschließt und die beiden Fluten (8, 9) bis hin zum Laufrad (3) mittels Gehäusewandung (5) voneinander getrennt sind, so dass die Abgasströme der beiden Fluten (8, 9) getrennt voneinander auf das Laufrad (3) geleitet werden, und
- die beiden Fluten (8, 9) der Turbine (1) innerhalb des Turbinengehäuses (2) durch Freigeben mindestens einer Öffnung (5a) in der Gehäusewandung (5) stromaufwärts des Laufrades (3) und stromabwärts der Eintrittsöffnungen (6, 7) miteinander verbindbar sind,
**dadurch gekennzeichnet, dass**
- mindestens ein verschiebbares Wandstück (5b) vorgesehen ist, das dem Freigeben der mindestens einen Öffnung (5a) in der Gehäusewandung (5) dient, wobei das mindestens eine verschiebbare Wandstück (5b) entlang der Strömungsrichtung des Abgases verschiebbar ist.

2. Aufgeladene Brennkraftmaschine nach Anspruch 1, **dadurch gekennzeichnet, dass** die zweiflutige Turbine (1) eine Doppelstromturbine (12) ist, bei der die zwei Fluten (8, 9) - in einem Schnitt senkrecht zur Drehachse (4) des Laufrades (3) gesehen - aufeinander liegend angeordnet sind und zumindest entlang eines bogenförmigen Abschnitts das Laufrad (3) spiralförmig auf unterschiedlich großen Radien umschließen.

3. Aufgeladene Brennkraftmaschine nach Anspruch 2, **dadurch gekennzeichnet, dass** die beiden Eintrittsöffnungen (6, 7) der Doppelstromturbine (12) radial unterschiedlich weit beabstandet zur Welle (4) der Turbine (1) im Gehäuse (5) angeordnet sind.

4. Aufgeladene Brennkraftmaschine nach Anspruch 1, **dadurch gekennzeichnet, dass** die zweiflutige Turbine (1) eine Zwillingsstromturbine (11) ist, bei der die beiden Fluten (8, 9) das Laufrad (3) - nebeneinander angeordnet - zumindest entlang eines bogenförmigen Abschnitts spiralförmig auf gleichgroßen Radien umschließen.

5. Aufgeladene Brennkraftmaschine nach Anspruch 4, **dadurch gekennzeichnet, dass** die beiden Eintrittsöffnungen (6, 7) der Zwillingsstromturbine (11) radial gleichweit beabstandet zur Welle (4) der Turbine (1) im Gehäuse (5) angeordnet sind.

6. Aufgeladene Brennkraftmaschine nach einem der vorherigen Ansprüche, **dadurch gekennzeichnet, dass** die Gehäusewandung (5) eine unbewegliche und fest mit dem Gehäuse (2) verbundene Wand ist.

7. Aufgeladene Brennkraftmaschine nach einem der vorherigen Ansprüche, **dadurch gekennzeichnet, dass** die mindestens eine Öffnung (5a) eine kammförmige Gestalt aufweist und das mindestens eine verschiebbare Wandstück (5b) eine dazu korrespondierende Gestalt hat.

8. Aufgeladene Brennkraftmaschine nach einem der vorherigen Ansprüche, **dadurch gekennzeichnet, dass** die Abgasleitungen der Zylinder jeder Zylindergruppe innerhalb des Zylinderkopfes unter Ausbildung von zwei Abgaskrümmern jeweils zu einer Gesamtabgasleitung zusammenführen.

9. Verfahren zum Betreiben einer aufgeladenen Brennkraftmaschine nach einem der vorherigen Ansprüche, **dadurch gekennzeichnet, dass** die beiden Fluten (8, 9) der Turbine (1) miteinander verbunden werden, wenn die Abgasmenge der beiden Zylindergruppen eine erste vorgebbare Abgasmenge übersteigt, wobei die beiden Fluten (8, 9) der Turbine (1) durch Verschieben des mindestens einen Wandstücks (5b) miteinander verbunden werden.

10. Verfahren nach Anspruch 9, **dadurch gekennzeichnet, dass** ausgehend von miteinander verbundenen Fluten (8, 9) die beiden Fluten (8, 9) der Turbine (1) voneinander getrennt werden, wenn die Abgasmenge der beiden Zylindergruppen eine zweite vorgebbare Abgasmenge unterschreitet.

## Claims

1. Supercharged internal combustion engine having at least one cylinder head with at least two cylinders, in which
- each cylinder has at least one outlet opening for discharging the exhaust gases out of the cylinder, and each outlet opening is adjoined by an exhaust line,
- at least two cylinders are configured in such a way as to form two groups with in each case at least one cylinder,
- the exhaust lines of the cylinders of each cylinder group merge to form a respective overall exhaust line, thus forming an exhaust manifold,
- the two overall exhaust lines are connected to a two-channel turbine (1), which comprises a rotor (3) mounted on a rotatable shaft (4) in a turbine housing (2), in such a way that in each case one overall exhaust line is connected to one of the two inlet openings (6, 7) of the turbine (1), each inlet opening (6, 7) being adjoined by one channel (8, 9) of the turbine (1) and the two channels (8, 9) being separated from one another as far as the rotor (3) by means of a housing wall (5), such that the exhaust-gas streams of the two channels (8, 9) are conducted separate from one another to the rotor (3), and
- the two channels (8, 9) of the turbine (1) can be connected to one another within the turbine housing (2) by virtue of at least one opening (5a) in the housing wall (5) upstream of the rotor (3) and downstream of the inlet openings (6, 7) being opened up,
**characterized in that**
- at least one displaceable wall part (5b) is provided which serves for opening up the at least one opening (5a) in the housing wall (5), the at least one displaceable wall part (5b) being displaceable along the flow direction of the exhaust gas.

2. Supercharged internal combustion engine according to Claim 1, **characterized in that** the two-channel turbine (1) is a dual-flow turbine (12) in which the two channels (8, 9) are arranged one on top of the other as viewed in a section perpendicular to the axis of rotation (4) of the rotor (3) and, at least along an arc-shaped segment, enclose the rotor (3) in spiral form at different radii.

3. Supercharged internal combustion engine according to Claim 2, **characterized in that** the two inlet openings (6, 7) of the dual-flow turbine (12) are arranged in the housing (5) at different radial distances from the shaft (4) of the turbine (1).

4. Supercharged internal combustion engine according to Claim 1, **characterized in that** the two-channel turbine (1) is a twin-flow turbine (11) in which the two channels (8, 9) are arranged adjacent to one another and, at least along an arc-shaped segment, enclose the rotor (3) in spiral form at equal radii.

5. Supercharged internal combustion engine according to Claim 4, **characterized in that** the two inlet openings (6, 7) of the twin-flow turbine (11) are arranged in the housing (5) at the same radial distance from the shaft (4) of the turbine (1).

6. Supercharged internal combustion engine according to one of the preceding claims, **characterized in that** the housing wall (5) is an immovable wall that is fixedly connected to the housing (2).

7. Supercharged internal combustion engine according to one of the preceding claims, **characterized in that** the at least one opening (5a) has a comb-shaped form and the at least one displaceable wall part (5b) has a form corresponding thereto.

8. Supercharged internal combustion engine according to one of the preceding claims, **characterized in that** the exhaust lines of the cylinders of each cylinder group merge to form a respective overall exhaust line, thus forming two exhaust manifolds, within the cylinder head.

9. Method for operating a supercharged internal combustion engine according to one of the preceding claims, **characterized in that** the two channels (8, 9) of the turbine (1) are connected to one another if the exhaust-gas flow rate from the two cylinder groups exceeds a first predefinable exhaust-gas flow rate, the two channels (8, 9) of the turbine (1) being connected to one another by displacement of the at least one wall part (5b).

10. Method according to Claim 9, **characterized in that,** proceeding from a state in which the channels (8, 9) are connected to one another, the two channels (8, 9) of the turbine (1) are separated from one another if the exhaust-gas flow rate from the two cylinder groups falls below a second predefinable exhaust-gas flow rate.

## Revendications

1. Moteur à combustion interne suralimenté qui comprend au moins une culasse et au moins deux cylindres et dans lequel
- chaque cylindre comporte au moins une ouverture de sortie destinée à évacuer les gaz d'échappement du cylindre et un conduit de gaz d'échappement est raccordé à chaque ouverture de sortie,
- au moins deux cylindres sont configurés de manière à former deux groupes comportant chacun au moins un cylindre,
- les conduits de gaz d'échappement des cylindres de chaque groupe de cylindres se réunissent en un conduit de gaz d'échappement général en formant un collecteur de gaz d'échappement,
- les deux conduits de gaz d'échappement généraux sont reliés à une turbine à double flux (1), qui comprend un rotor (3) monté sur un arbre rotatif (4) dans un carter de turbine (2), de manière à ce qu'un conduit de gaz d'échappement général soit relié à l'une des ouverture d'entrée (6, 7) de la turbine (1), un flux (8, 9) de la turbine (1) se raccordant à chaque ouvertures d'entrée (6, 7) et les deux flux (8, 9) étant séparés l'un de l'autre jusqu'au rotor (3) au moyen de la paroi de carter (5) de sorte que les écoulements de gaz d'échappement des deux flux (8, 9) soient acheminés vers le rotor (3) séparément l'un de l'autre, et
- les deux flux (8, 9) de la turbine (1) sont reliés l'un à l'autre dans le carter de turbine (2) par libération d'au moins une ouverture (5a) ménagée dans la paroi de carter (5) en amont du rotor (3) et en aval des ouvertures d'entrée (6, 7),
**caractérisé en ce que**
- il est prévu au moins une pièce de paroi coulissante (5b) qui sert à libérer l'au moins une ouverture (5a) ménagée dans la paroi de carter (5), l'au moins une pièce de paroi coulissante (5b) pouvant coulisser dans la direction d'écoulement des gaz d'échappement.

2. Moteur à combustion interne suralimenté selon la revendication 1, **caractérisé en ce que** la turbine à double flux (1) est une turbine à double écoulement (12) dans laquelle les deux flux (8, 9) sont disposés de manière superposée dans une vue en coupe perpendiculaire à l'axe de rotation (4) du rotor (3) et entourent le rotor (3) en spirale, avec des rayons différents, au moins le long d'une partie incurvée.

3. Moteur à combustion interne suralimenté selon la revendication 2, **caractérisé en ce que** les deux ouvertures d'entrée (6, 7) de la turbine à double écoulement (12) sont ménagées dans le carter (5) en étant espacées radialement de l'arbre (4) de la turbine (1) avec des distances différentes.

4. Moteur à combustion interne suralimenté selon la revendication 1, **caractérisé en ce que** la turbine à double flux (1) est une turbine à double écoulement (11) dans laquelle les deux flux (8, 9) entourent le rotor (3) en spirale, en étant disposés côte à côte, au moins le long d'une partie incurvée avec des rayons égaux.

5. Moteur à combustion interne suralimenté selon la revendication 4, **caractérisé en ce que** les deux ouvertures d'entrée (6, 7) de la turbine à double écoulement (11) sont ménagées dans le carter (5) radialement à équidistance de l'arbre (4) de la turbine (1) .

6. Moteur à combustion interne suralimenté selon l'une des revendications précédentes, **caractérisé en ce que** la paroi de carter (5) est une paroi immobile et fixée au carter (2).

7. Moteur à combustion interne suralimenté selon l'une des revendications précédentes, **caractérisé en ce que** l'au moins une ouverture (5a) a une forme en peigne et l'au moins une pièce de paroi coulissante (5b) a une forme correspondante.

8. Moteur à combustion interne suralimenté selon l'une des revendications précédentes, **caractérisé en ce que** les conduits de gaz d'échappement du cylindre de chaque groupe de cylindres se réunissent dans la culasse en un conduit de gaz d'échappement général en formant deux collecteurs de gaz d'échappement.

9. Procédé de fonctionnement d'un moteur à combustion interne suralimenté selon l'une des revendications précédentes, **caractérisé en ce que** les deux flux (8, 9) de la turbine (1) sont reliés l'un à l'autre lorsque la quantité de gaz d'échappement des deux groupes de cylindres dépasse une première quantité prédéterminée de gaz d'échappement, les deux flux (8, 9) de la turbine (1) étant reliés l'un à l'autre par coulissement de l'au moins une pièce de paroi (5b).

10. Procédé selon la revendication 9, **caractérisé en ce que**, à partir de flux (8, 9) reliés entre eux, les deux flux (8, 9) de la turbine (1) sont séparés l'un de l'autre lorsque la quantité de gaz d'échappement des deux groupes de cylindres devient inférieure à une deuxième quantité prédéterminée de gaz d'échappement.
